# FASCICULE DE BREVET EUROPEEN

(11) **EP 1 172 536 B1**
(45) Date de publication et mention de la délivrance du brevet: **21.05.2003**
(21) Numéro de dépôt: 01401777.6
(22) Date de dépôt: 03.07.2001
(51) Int. Cl.: F01N 7/18, F16L 55/033, B60K 13/04

(54) **Suspentes pour lignes d'échappements de véhicules automobiles, et véhicules équipés de telles suspentes**
Aufhängung für Kraftfahrzeugauspuffanlagen
Automobile exhaust system suspension and motor vehicle equipped therewith

(30) Priorité: 10.07.2000 FR 0008972
(43) Date de publication de la demande: 16.01.2002
(73) Titulaire: HUTCHINSON, 75008 Paris (FR)
(72) Inventeur: Monneau, Jean-Pierre, 28220 Douy (FR)
(74) Mandataire: Bérogin, Francis

(56) Documents cités:
- EP-A- 0 945 297
- EP-A- 0 979 930
- DE-C- 19 500 191
- FR-A- 2 761 730

## Description

La présente invention est relative aux suspentes pour lignes d'échappements de véhicules automobiles, et aux véhicules équipés de telles suspentes.

Plus particulièrement, l'invention concerne une suspente pour ligne d'échappement de véhicule automobile, comportant une armature supérieure rigide propre à être assujettie à la caisse du véhicule et une armature inférieure rigide propre à être assujettie à une ligne d'échappement qui s'étend longitudinalement dans une direction générale parallèle à un premier axe, ces deux armatures étant reliées l'une à l'autre par un ensemble élastique en élastomère comportant :
- d'une part, un bras central de support adapté pour supporter des efforts de traction selon un deuxième axe perpendiculaire au premier axe et pour filtrer et amortir des mouvements vibratoires relatifs entre les armatures supérieure et inférieure, ledit bras de support étant disposé perpendiculairement au premier axe et s'étendant en biais selon le deuxième axe et selon un troisième axe, perpendiculaire aux premier et deuxième axes entre un sommet solidaire de l'armature supérieure et une base solidaire de l'armature inférieure, le bras de support s'étendant dans un premier sens selon le troisième axe depuis son sommet jusqu'à sa base et,
- d'autre part, un anneau limiteur souple entourant le bras de support et relié aux deux armatures pour limiter les débattements relatifs desdites armatures dans un sens correspondant à un allongement du bras de support.

Une suspente de ce type est connue notamment par le document FR-A-2 761 730. Elle donne globalement satisfaction du point de vue de son fonctionnement, mais elle est coûteuse à réaliser en raison de sa complexité.

La présente invention vise notamment à pallier cet inconvénient des suspentes de l'art antérieur, en proposant une suspente qui concilie toutes les exigences de fonctionnement, celle-ci pouvant être fabriquée simplement et à moindre coût.

A cet effet, la suspente, objet de l'invention, se caractérise en ce qu'elle comporte un unique bras de support et en ce que les armatures supérieure et inférieure comportent respectivement des rabats rigides qui sont disposés face à face selon le troisième axe de façon à buter l'un contre l'autre pour limiter les débattements relatifs de l'armature inférieure par rapport à l'armature supérieure selon le troisième axe dans un deuxième sens opposé au premier sens.

Grâce à ces dispositions, du fait de la présence d'un unique bras de support et de la présence de butées de conception simple, on obtient une suspente peu coûteuse, qui présente d'excellentes caractéristiques de filtration des vibrations notamment grâce à une raideur relativement faible selon le troisième axe, tout en conservant une limitation efficace des mouvements selon ce troisième axe.

Cette suspente est particulièrement efficace lorsqu'elle est utilisée par paire et montée en opposition.

Dans des modes de réalisation avantageux, on peut avoir notamment recours en outre à l'une et/ou l'autre des dispositions suivantes :
- les rabats des deux armatures sont en correspondance mutuelle sur une certaine largeur de recouvrement supérieure à 2 cm, mesurée selon le premier axe, et lesdits rabats sont disposés pour que ladite largeur de recouvrement soit encore au moins égale à 2 cm, pour un déplacement relatif d'1 cm selon le premier axe ;
- le rabat de l'armature inférieure présente une largeur inférieure à la largeur du rabat de l'armature supérieure, selon le premier axe ;
- les rabats des armatures supérieure et inférieure sont recouverts d'une couche d'élastomère venue de matière avec le bras de support et l'anneau limiteur ;
- le rabat des armatures bute contre une partie horizontale solidaire de l'autre armature dans un sens correspondant à la compression du bras de support selon le deuxième axe ;
- la paroi de l'armature supérieure bute contre la base du bras de support dans le premier sens selon le troisième axe ;
- l'anneau limiteur souple est adapté pour entrer en résonance à une fréquence comprise entre 250 et 350 Hz pour diminuer la raideur dynamique de la suspente au voisinage de cette fréquence ;
- l'anneau limiteur souple est pourvu sur sa surface périphérique d'une pluralité de rainures.

Selon un autre aspect de l'invention, celle-ci a pour objet un véhicule comportant une caisse et une ligne d'échappement reliée à la caisse par au moins une suspente telle que définie ci-dessus.

Avantageusement, la ligne d'échappement est reliée à la caisse par au moins deux suspentes montées en opposition, dont les anneaux souples respectifs sont disposés selon deux plans inclinés convergeant l'un vers l'autre vers le bas.

D'autres caractéristiques et avantages de la présente invention ressortiront de la description faite ci-après, en référence aux dessins annexés qui en illustrent un exemple de réalisation dépourvu de tout caractère limitatif.

Sur les dessins :
- la figure 1 est une vue en élévation latérale de la suspente selon une forme de réalisation de l'invention ;
- la figure 2 est une vue de dessus de la suspente selon la figure 1 ;

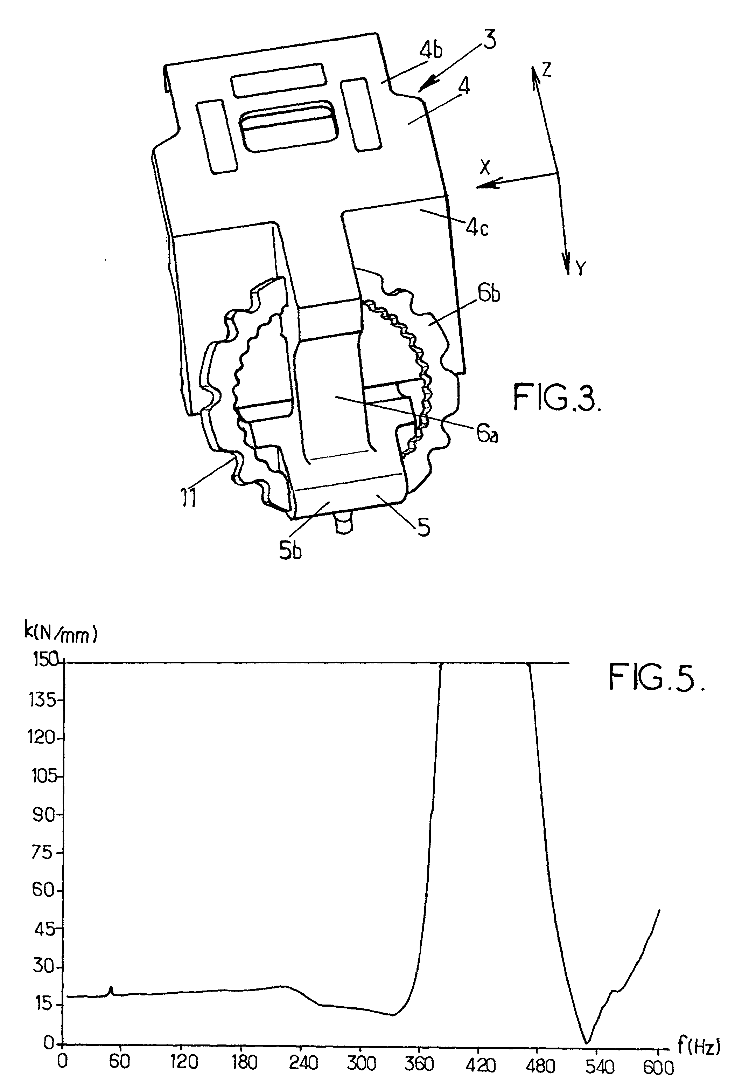

- la figure 3 est une vue en perspective de la suspente des figures 1 et 2 ;
- la figure 4 est une vue de face illustrant le montage d'une ligne d'échappement sur un véhicule, au moyen de deux suspentes montées en opposition ;
- la figure 5 est une courbe donnant l'évolution de la raideur dynamique de la suspente des figures 1 à 3, selon l'axe vertical en fonction de la fréquence.

Sur les différentes figures, l'orientation de la suspente dans l'espace a été repérée par la représentation des trois axes perpendiculaires entre eux : Z pour la direction verticale, Y pour la direction horizontale et transversale et X pour la direction horizontale et axiale (selon l'axe du véhicule, sensiblement colinéaire à l'axe général de la ligne d'échappement).

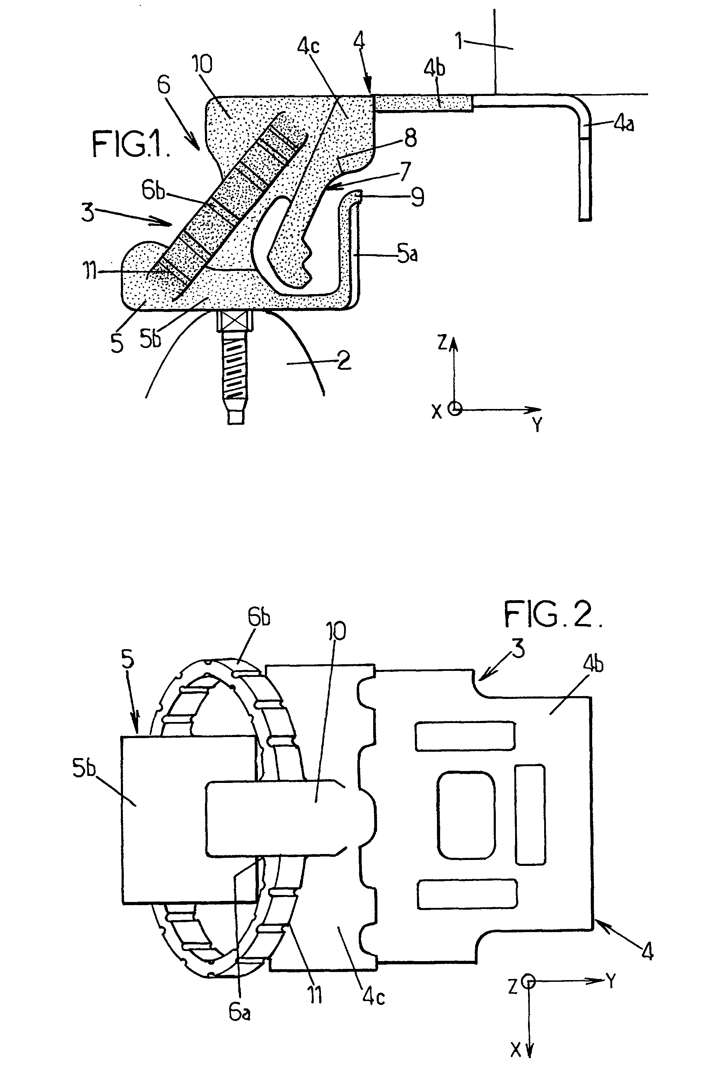

Sur les figures 1, 2, 4, on a désigné par la référence 1, la caisse du véhicule (il peut s'agir notamment de ses longerons), par la référence 2 la ligne d'échappement (par exemple au niveau du silencieux), par la référence 3 une suspente reliant la ligne d'échappement à la caisse du véhicule.

La suspente 3 est constituée :
- d'une armature supérieure 4 destinée à être reliée à la caisse du véhicule 1,
- d'une armature inférieure 5 destinée à être reliée à l'échappement 2,
- et d'un ensemble élastique 6 en élastomère reliant entre-elles les deux armatures 4, 5.

L'armature supérieure 4, venue de pliage ou d'emboutissage d'un feuillard métallique, comporte un premier étrier pouvant être vissé à la caisse du véhicule 1. La liaison à la caisse du véhicule peut être effectuée à l'aide d'un orifice, fente, ou analogue pratiqué au niveau de l'un 4b des rabats de l'armature 4, cet orifice permettant le passage d'un premier organe de liaison avec la caisse.

Cet étrier comporte une âme horizontale supérieure 4b prolongée vers le bas par deux rabats latéraux 4a, 4c. De plus, l'un 4c au moins des rabats présente un angle supérieur à 90° par rapport à celui 4b qui lui est contigu.

Le rabat 4c s'étend sensiblement parallèlement dans le plan défini par le deuxième axe Z et le troisième axe Y et perpendiculairement au premier X. Le rabat 4a est situé dans un plan parallèle au plan défini par les axes X,Z et perpendiculaire au troisième Y.

Selon une autre caractéristique de l'invention, le rabat incliné 4c de l'armature supérieure 4 est recouvert par une couche d'élastomère surmoulée qui comporte une zone évidée 8, au niveau de sa face interne 7 horizontale (celle qui est dirigée vers l'échappement 2 lorsque la suspente est montée sur le véhicule).

Cette zone évidée 8 est positionnée sensiblement en regard d'un rabat 5a appartenant à l'armature inférieure 5.

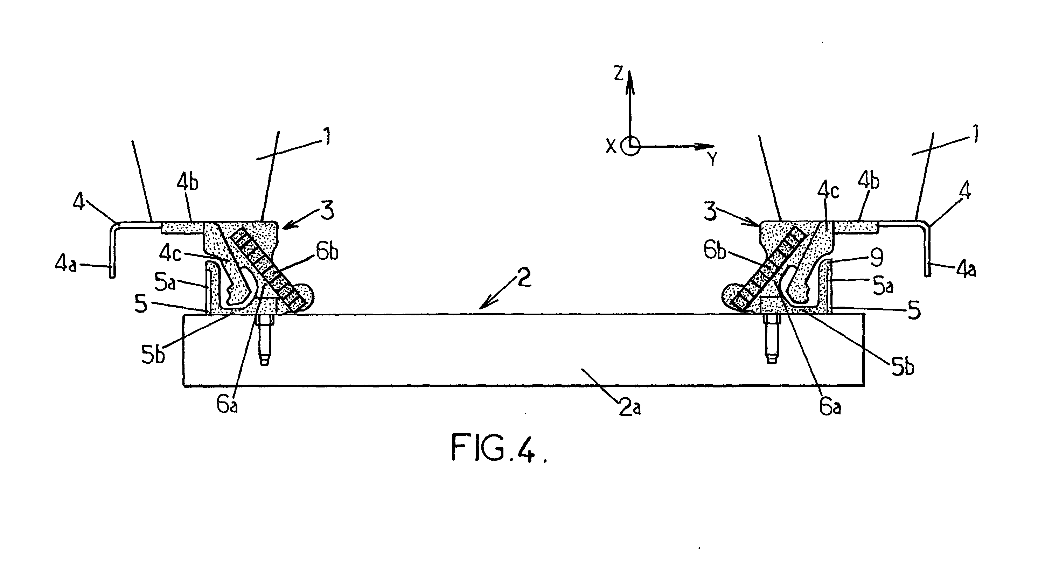

L'armature inférieure 5, venue également de pliage ou d'emboutissage d'un feuillard métallique, comporte un second étrier pouvant être vissé à l'échappement 2 du véhicule. Ce second étrier présente une forme sensiblement en L et comporte une âme horizontale inférieure 5b prolongée vers le haut par un rabat latéral 5a. L'âme 5b est sensiblement positionnée selon le plan horizontal défini par les premier et troisième axes respectivement X et Y tandis que le rabat 5a est perpendiculaire à ce même plan et s'étend verticalement selon le deuxième axe Z. L'âme 5b dispose d'un second organe de liaison avec l'échappement. Il peut s'agir, comme représenté sur les figures 1 et 4, d'un goujon ou similaire.

On peut noter par ailleurs que le rabat 5a qui fait face au rabat 5c de l'armature supérieure 4 au niveau de la zone évidée 8 en élastomère, comporte, à l'une de ses extrémités, un talon 9 en élastomère, ce talon 9 venant en butée de la zone évidée 8 horizontale lorsque les armatures supérieure 4 et inférieure 5 sont en limite de déplacement relatif en compression selon l'axe Z.

De manière similaire à l'armature supérieure 4, l'étrier formant l'armature inférieure 5 est enrobé d'une couche d'élastomère, notamment sur la face supérieure de l'âme 5b et sur la face du rabat 5a qui est orientée vers le rabat 4c.

Par ailleurs, l'armature supérieure 4 comprend une partie en saillie 10 qui s'étend sensiblement dans le même plan que la face 4b de l'armature 4, et sur laquelle est surmoulé et adhérisé un bras central de support 6a en élastomère appartenant à l'ensemble élastique 6.

L'unique bras de support 6a est disposé perpendiculairement au premier axe X et s'étend en biais selon le deuxième axe Z et selon le troisième axe Y, entre le sommet 10 solidaire de l'armature supérieure 4 et une base adhérisée à la face supérieure de l'âme 5b de l'armature inférieure 5.

Plus précisément, le bras de support 6a s'étend dans un premier sens selon l'axe Y, depuis son sommet vers sa base. Il supporte le poids de la ligne d'échappement et amortit et filtre les vibrations entre cette ligne d'échappement 2 et la caisse 1 du véhicule, avec une relativement faible raideur selon les axes Y et Z.

Ce bras central de support 6a est par ailleurs inséré au sein d'un anneau limiteur 6b qui est coplanaire audit bras de support 6a, et qui est généralement réalisé en enrobant une âme annulaire souple et inextensible dans de l'élastomère.

Cet anneau 6b relie également l'armature supérieure 4 à l'armature inférieure 5, et constitue un second élément de l'ensemble élastique 6.

Cet ensemble est assemblé aux armatures de manière à conformer la suspente. Compte tenu de sa géométrie, en particulier du fait que le bras de support 6a et l'anneau 6b sont dans un même plan et que le bras de support 6a est unique, toutes les parties en élastomère de la suspente peuvent être moulées d'une seule pièce, en une seule opération de moulage.

L'anneau limiteur 6b est relié aux deux armatures 4, 5 pour limiter les débattements relatifs desdites armatures dans un sens correspondant à un allongement du bras de support 6a.

Cet anneau limiteur 6b souple est adapté pour entrer en résonance à une fréquence comprise sensiblement dans la fourchette 250 à 350 Hz pour diminuer la raideur dynamique de la suspente 3 au voisinage de cette fréquence, par effet « batteur ».

Ce phénomène est explicité au niveau de la figure 5, par laquelle il apparaît que dans la gamme de fréquences f comprises entre 250 à 350 Hz, la raideur k chute d'une dizaine de N/mm avant de remonter.

Afin de favoriser la flexion de l'anneau souple 6b, ce dernier est pourvu sur sa surface périphérique d'une pluralité de rainures 11.

Selon une caractéristique de l'invention, les armatures supérieure 4 et inférieure 5 sont montées de telle façon que l'armature inférieure 5 se trouve décalée latéralement selon l'axe Y par rapport à l'armature supérieure 4. Le bras central de support 6a est ainsi positionné sensiblement dans un plan parallèle au rabat 4c de l'armature supérieure et délimite un espace avec le rabat 5a de l'armature inférieure 5. Dans cet espace, la paroi 4c peut se mouvoir selon les axes X, Y, et Z, mais les amplitudes selon les axes Y et Z sont limitées :
- lorsque le rabat 4c talonne l'âme 5b de l'armature inférieure selon l'axe Z et/ou le rabat 5a talonne la couche d'élastomère recouvrant le rabat 4c de l'armature supérieure 4 selon l'axe Z,
- lorsque les rabats 5a et 4c butent l'un contre l'autre selon l'axe Y dans un deuxième sens opposé au premier sens,
- lorsque le rabat 4c de l'armature supérieure 4 bute contre la base du bras de support 6a dans le premier sens selon l'axe Y (lorsque la suspente est associée à une deuxième suspente montée en opposition, comme explicité plus en détail ci-après en regard de la figure 4, la limitation du mouvement dans ce sens est également obtenue par butée des rabats 5a et 4c de la deuxième suspente).

Ces limitations introduites par les butées dans l'amplitude des mouvements relatifs entre les deux armatures définissent les déformations extrêmes pouvant être encaissées par l'ensemble en élastomère à réserver aux couches de revêtement 6a, 6b, garantissant ainsi la pérennité de la suspente.

Dans ce type de configuration où l'armature inférieure 5 est décalée latéralement par rapport à l'armature supérieure 4, ceci permet également de positionner l'anneau limiteur 6b, selon un plan incliné par rapport à la verticale.

Selon encore une autre caractéristique de l'invention, l'armature assujettie à la caisse du véhicule, (dans ce cas l'armature supérieure 4) présente une dimension selon l'axe X beaucoup plus grande que la dimension de l'armature qui coopère à l'échappement.

En particulier, dans l'exemple représenté au niveau de la figure 2, le rabat 4c de l'armature supérieure 4 est beaucoup plus large (dans le sens de l'axe X) que le rabat 5a appartenant à l'armature inférieure 5.

Cette disposition permet aux deux armatures de demeurer toujours en face l'une de l'autre pour assurer la limitation suivant l'axe Y, quelle que soit l'intensité de la dilatation thermique de la ligne d'échappement selon l'axe X.

A cet effet, les rabats 4c, 5a des deux armatures 4, 5 peuvent avantageusement être en correspondance mutuelle sur une certaine largeur de recouvrement supérieure à 2 cm, mesurée selon le premier axe X, et lesdits rabats sont disposés pour que ladite largeur de recouvrement soit encore au moins égale à 2 cm pour un déplacement relatif d'1 cm selon le premier axe X.

Comme représenté sur la figure 4, la suspente est destinée à être montée en opposition avec une suspente identique. Les armatures supérieures 4 des deux suspentes 3 montées en opposition peuvent être fixées par exemple aux longerons droit et gauche de la caisse du véhicule et les armatures inférieures 5 des deux suspentes peuvent être fixées à un organe rigide 2a appartenant à la ligne d'échappement ou fixées rigidement à ladite ligne d'échappement, l'organe rigide 2a en question pouvant être constitué notamment par le silencieux de la ligne d'échappement.

Les anneaux limiteurs 6b des deux suspentes 3 peuvent être disposés l'un en regard de l'autre dans des plans qui convergent vers le bas, tandis que les rabats 5a des deux suspentes sont disposés l'un à l'opposé de l'autre.

Dans ce montage en opposition, les rabats 4c et 5a de l'une des suspentes coopèrent mutuellement par butée pour limiter le débattement de la ligne d'échappement dans un premier sens selon l'axe Y, tandis que les rabats 4c et 5a de l'autre suspente coopèrent mutuellement par butée pour limiter les débattements de la ligne d'échappement dans l'autre sens selon l'axe Y.

## Revendications

1. Suspente (3) pour ligne d'échappement (2) de véhicule automobile, comportant une armature supérieure (4) rigide propre à être assujettie à la caisse (1) du véhicule et une armature inférieure (5) rigide propre à être assujettie à une ligne d'échappement qui s'étend longitudinalement dans une direction générale parallèle à un premier axe (X), ces deux armatures (4, 5) étant reliées l'une à l'autre par un ensemble élastique (6) en élastomère comportant :
- d'une part, un bras central de support (6a) adapté pour supporter des efforts de traction selon un deuxième axe (Z) et pour filtrer et amortir des mouvements vibratoires relatifs entre les armatures supérieure (4) et inférieure (5), ledit bras de support (6a) étant disposé perpendiculairement au premier axe (X) et s'étendant en biais selon le deuxième axe (Z) et selon un troisième axe (Y), perpendiculaire aux premier et deuxième axes entre un sommet (10) solidaire de l'armature supérieure (4) et une base solidaire de l'armature inférieure (5), le bras de support (6a) s'étendant dans un premier sens selon le troisième axe (Y) depuis son sommet jusqu'à sa base et
- d'autre part, un anneau limiteur (6b) souple entourant le bras de support (6a) et qui est relié aux deux armatures (4, 5) pour limiter les débattements relatifs desdites armatures (4, 5) dans un sens correspondant à un allongement du bras de support (6a),
**caractérisée en ce qu'**elle comporte un unique bras de support (6a) et **en ce que** les armatures supérieure (4) et inférieure (5) comportent respectivement des rabats (4c, 5a) rigides qui sont disposés face à face selon le troisième axe (Y) de façon à buter l'un contre l'autre pour limiter les débattements relatifs de l'armature inférieure (5) par rapport à l'armature supérieure (4) selon le troisième axe (Y) dans un deuxième sens opposé au premier sens.

2. Suspente selon la revendication 1, dans laquelle les rabats (4c, 5a) des deux armatures (4, 5) sont en correspondance mutuelle sur une certaine largeur de recouvrement supérieure à 2 cm, mesurée selon le premier axe (X), et lesdits rabats sont disposés pour que ladite largeur de recouvrement soit encore au moins égale à 2 cm pour un déplacement relatif d'1 cm selon le premier axe (X).

3. Suspente selon l'une des revendications 1 ou 2, dans laquelle le rabat (5a) de l'armature inférieure (5) présente une largeur inférieure à la largeur du rabat (4c) de l'armature supérieure (4), selon le premier axe (X).

4. Suspente selon l'une quelconque des revendications 1 à 3, dans laquelle les rabats (4c, 5a) des armatures supérieure (4) et inférieure (5) sont recouverts d'une couche d'élastomère venue de matière avec le bras de support (6a) et l'anneau limiteur (6b).

5. Suspente selon l'une quelconque des revendications 1 à 4, dans laquelle le rabat (4c, 5a) des armatures bute contre une partie horizontale (8, 5b) solidaire de l'autre armature dans un sens correspondant à la compression du bras de support (6a) selon le deuxième axe (Z)

6. Suspente selon l'une quelconque des revendications 1 à 5, dans laquelle la paroi (4c) de l'armature supérieure (4) bute contre la base du bras de support (6a) dans le premier sens selon le troisième axe (Y)

7. Suspente selon l'une quelconque des revendications précédentes, dans laquelle l'anneau limiteur (6b) souple est adapté pour entrer en résonance à une fréquence comprise entre 250 et 350 Hz pour diminuer la raideur dynamique de la suspente (3) au voisinage de cette fréquence.

8. Suspente selon l'une quelconque des revendications précédentes, dans laquelle l'anneau limiteur souple (6b) est pourvu sur sa surface périphérique d'une pluralité de rainures (11).

9. Véhicule comportant une caisse (1) et une ligne d'échappement (2) reliée à la caisse (1) par au moins une suspente (3), selon l'une quelconque des revendications 1 à 8.

10. Véhicule selon la revendication 9, dans lequel la ligne d'échappement (2) est reliée à la caisse (1) par au moins deux suspentes (3) montées en opposition, dont les anneaux souples (6b) respectifs sont disposés selon deux plans inclinés convergeant l'un vers l'autre vers le bas.

## Claims

1. A suspension fitting (3) for a motor vehicle exhaust system (2), the fitting comprising a rigid top armature (4) suitable for being secured to the bodywork (1) of the vehicle and a rigid bottom armature (5) suitable for being secured to an exhaust system which extends longitudinally in a general direction parallel to a first axis (X), these two armatures (4,5) being connected to each other by a resilient unit (6) made of elastomer and comprising:
· firstly a central support arm (6a) adapted to support traction forces along a second axis (Z) and to filter and damp relative vibratory motion between the top and bottom armatures (4,5), said support arm (6a) being disposed perpendicularly to the first axis (X) and extending at an angle between a top (10) secured to the top armature (4) and a bottom secured to the bottom armature (5), said angle being relative to the second axis (Z) and relative to a third axis (Y) that is perpendicular to the first and second axes, the support arm (6a) extending in a first direction along the third axis (Y) from its top to its bottom; and
· secondly a flexible limiting ring (6b) surrounding the support arm (6a) and connected to the two armatures (4,5) to limit relative travel of said armatures (4,5) in a direction corresponding to the support arm (6a) lengthening;
the fitting being **characterized in that** it comprises only a single support arm (6a) and **in that** the top and bottom armatures (4,5) include respective rigid laps (4c,5a) placed facing each other along the third axis (Y) so as to come into abutment against each other to limit relative travel of the bottom armature (5) relative to the top armature (4) along the third axis (Y) in a second direction opposite to the first direction.

2. A fitting according to claim 1, in which the laps (4c, 5a) of the two armatures (4,5) correspond mutually over a certain overlap width greater than 2 cm measured along the first axis (X), and said laps are disposed so that said overlap width is still at least 2 cm after relative displacement through 1 cm along the first axis (X).

3. A fitting according to claim 1 or claim 2, in which the lap (5a) of the bottom armature (5) is of a width along the first axis (X) that is less than the width of the lap (4c) of the top armature (4) along the first axis (X).

4. A fitting according to any one of claims 1 to 3, in which the laps (4c,5a) of the top and bottom armatures (4,5) are covered in a layer of elastomer that is integral with the elastomer of the support arm (6a) and of the limiting ring (6b).

5. A fitting according to any one of claims 1 to 4, in which the respective laps (4c,5a) of the armatures come into abutment against respective horizontal portions (8,5b) of the other armatures in a direction corresponding to the support arm (6a) being compressed along the second axis (Z).

6. A fitting according to any one of claims 1 to 5, in which the lap (4c) of the top armature (4) comes into abutment against the bottom of the support arm (6a) in the first direction along the third axis (Y).

7. A fitting according to any preceding claim, in which the flexible limiting ring (6b) is adapted to enter into resonance at a frequency lying in the range 250 Hz to 350 Hz to diminish the dynamic stiffness of the fitting (3) in the vicinity of said frequency.

8. A fitting according to any preceding claim, in which the flexible limiting ring (6b) is provided on its peripheral surface with a plurality of grooves (11).

9. A vehicle comprising bodywork (1) and an exhaust system (2) connected to the bodywork (1) via at least one suspension fitting (3) according to any one of claims 1 to 8.

10. A vehicle according to claim 9, in which the exhaust system (2) is connected to the bodywork (1) via at least two fittings (3) mounted in opposition, the respective flexible rings (6b) thereof being disposed in two sloping planes that converge downwardly towards each other.

## Patentansprüche

1. Aufhängung (3) für Kraftfahrzeug-Auspuffanlagen (2) mit einer oberen starren Halterung (4), die geeignet ist, an der Karosserie (1) des Fahrzeugs fest angebracht zu werden, und mit einer unteren starren Halterung (5), die geeignet ist, an einer Auspuffanlage fest angebracht zu werden, welche sich in Längsrichtung allgemein parallel zu einer ersten Achse (X) erstreckt, wobei diese beiden Halterungen (4, 5) durch eine elastische Gesamtanordnung (6) aus Elastomer miteinander verbunden sind und aufweisen:
- einerseits einen zentralen Tragarm (6a), der geeignet ist, Zugkräften entlang einer zweiten Achse (Z) standzuhalten und relative Schwingungsbewegungen zwischen der oberen Halterung (4) und der unteren Halterung (5) zu filtern und zu dämpfen, wobei dieser Tragarm (6a) im rechten Winkel zu der ersten Achse (X) angeordnet ist und sich schräg gemäß der zweiten Achse (Z) und einer dritten Achse (Y), im rechten Winkel zur ersten und zur zweiten Achse zwischen einer mit der oberen Halterung (4) fest verbundenen Spitze (10) und einer mit der unteren Halterung (5) fest verbundenen Basis erstreckt, wobei der Tragarm (6a) sich in einer ersten Richtung gemäß der dritten Achse (Y) von seiner Spitze bis zu seiner Basis erstreckt, und
- andererseits einen biegsamen Begrenzungsring (6b), der den Tragarm (6a) umgibt und mit den beiden Halterungen (4, 5) verbunden ist, um die relativen Ausschläge dieser Halterungen (4, 5) in einer Richtung, die einer Verlängerung des Tragarms (6a) entspricht, zu beschränken,
**dadurch gekennzeichnet,**
**dass** sie einen einzigen Tragarm (6a) aufweist und dass die obere und die untere Halterung (4, 5) jeweils starre Umschlagelemente (4c, 5a) aufweisen, die einander gegenüber entlang der dritten Achse (Y) dergestalt angeordnet sind, dass sie aneinander anschlagen, um die relativen Ausschläge der unteren Halterung (5) gegenüber der oberen Halterung (4) entlang einer dritten Achse (Y) in einer zweiten Richtung, die zur ersten Richtung entgegengesetzt ist, zu begrenzen.

2. Aufhängung nach Anspruch 1, bei der die Umschlagelemente (4c, 5a) der beiden Halterungen (4, 5) über eine gewisse Abdeckungsbreite von mehr als 2 cm, die entlang der ersten Achse (X) gemessen wird, aneinander anschließen, und bei der diese Umschlagelemente dergestalt angeordnet sind, dass diese Abdeckungsbreite auch bei einer relativen Verschiebung von 1 cm entlang der ersten Achse (X) mindestens 2 cm beträgt.

3. Aufhängung nach einem der Ansprüche 1 oder 2, bei der das Umschlagelement (5a) der unteren Halterung (5) entlang der ersten Achse (X) eine geringere Breite hat als das Umschlagelement (4c) der oberen Halterung (4).

4. Aufhängung nach einem der Ansprüche 1 bis 3, bei der die Umschlagelemente (4c, 5a) der oberen Halterung (4) und der unteren Halterung (5) mit einer Elastomerschicht überzogen sind, die aus dem gleichen Werkstoff besteht wie der Tragarm (6a) und der Begrenzungsring (6b).

5. Aufhängung nach einem der Ansprüche 1 bis 4, bei der die Umschlagelemente (4c, 5a) der Halterungen an einem mit der anderen Halterung fest verbundenen horizontalen Teil (8, 5b) in einer Richtung in Anlage kommen, die dem Zusammendrücken des Tragarms (6a) längs der zweiten Achse (Z) entspricht.

6. Aufhängung nach einem der Ansprüche 1 bis 5, bei der die Wand (4c) der oberen Halterung (4) an der Basis des Tragarms (6a) in der ersten Richtung längs der dritten Achse (Y) in Anlage kommt.

7. Aufhängung nach einem der vorherigen Ansprüche, bei der der biegsame Begrenzungsring (6b) so beschaffen ist, dass er bei einer Frequenz von 250 bis 350 Hz in Resonanz kommt, um die dynamische Steife der Aufhängung (3) im Bereich dieser Frequenz zu verringern.

8. Aufhängung nach einem der vorherigen Ansprüche, bei der der biegsame Begrenzungsring (6b) an seiner Umfangsfläche mit einer Vielzahl von Rillen (11) versehen ist.

9. Fahrzeug mit einer Karosserie (1) und einer Auspuffanlage (2), die durch mindestens eine Aufhängung (3) mit der Karosserie (1) verbunden ist, nach einem der Ansprüche 1 bis 8.

10. Fahrzeug nach Anspruch 9, bei dem die Auspuffanlage (2) mit der Karosserie (1) durch mindestens zwei einander gegenüberliegend angebrachte Aufhängungen (3) verbunden ist, deren jeweilige biegsame Begrenzungsringe (6b) in zwei geneigten Ebenen angeordnet sind, die nach unten zueinander konvergieren.
